# EUROPÄISCHE PATENTANMELDUNG

(11) **EP 2 252 040 A1**
(43) Veröffentlichungstag der Anmeldung: **17.11.2010**
(21) Anmeldenummer: 10004799.2
(22) Anmeldetag: 06.05.2010
(51) Int. Cl.: H04M 3/493, G06F 17/30

(54) **Verfahren und Vorrichtung zum Anbahnen einer Kommunikationsverbindung**

(30) Priorität: 12.05.2009 DE 102009020887
(71) Anmelder: PeterPays AG, 80331 München (DE)
(72) Erfinder: Fischer, Franz, 82061 Neuried (DE); Badur, Gerd, 85540 Haar (DE)
(74) Vertreter: Leinweber & Zimmermann

(57) **Zusammenfassung**

Verfahren zum Anbahnen einer Kommunikationsverbindung, bei dem ansprechend auf eine entsprechende Suchanfrage einer Anfrageeinrichtung zu der Suchanfrage passende Datensätze in einer benutzeridentifizierende Identifikationsdaten sowie einen Kontakt zu dem entsprechenden Benutzer ermöglichende Kontaktdaten aufweisende Datensätze enthaltenden Speichereinrichtung gesucht und den zu der Suchanfrage passenden Datensätzen zur Identifikation der Suchanfrage dienende Anfragedaten zugeordnet werden, die Identifikationsdaten der passenden Datensätze zusammen mit den Anfragedaten an die Anfrageeinrichtung übertragen werden, die Anfragedaten ansprechend auf ein mit der Anfrageeinrichtung erzeugtes Bestätigungssignal an eine Vermittlungseinrichtung übertragen und von der Vermittlungseinrichtung an die Sucheinrichtung übermittelt werden und von der Sucheinrichtung die zu den Anfragedaten gehörenden Kontaktdaten an die Vermittlungseinrichtung übertragen werden. Und Vorrichtung zur Herstellung solcher Verfahren.

## Beschreibung

Zum Anbahnen von Kommunikationsverbindungen werden oft Auskunftsdienste in Anspruch genommen, um geeignete Kontaktdaten, wie etwa Telefonnummern, zu erfahren. Bei Inanspruchnahme herkömmlicher Auskunftsdienste ist es allerdings problematisch, dass eine Vielzahl von Kontaktdaten, wie etwa Handynummern, auf eine entsprechende Suchanfrage nicht beauskunftet werden können, da diese Daten in den öffentlichen Teilnehmerverzeichnissen fehlen. In vielen Fällen sind derartige Kontaktdaten aber in den Datenbanken sozialer Netzwerke, wie etwa facebook, Linked-In, XING, etc. oder dergleichen, zusammen mit den entsprechenden benutzeridentifizierenden Identifikationsdaten vorhanden. In vielen Fällen dürfen diese Kontaktdaten jedoch nur nach Zustimmung durch den Benutzer an einen bestimmten oder alle anderen Benutzer weitergegeben werden. Angesichts dieser Probleme im Stand der Technik liegt der Erfindung die Aufgabe zugrunde, ein Verfahren zum Anbahnen einer Kommunikationsverbindung anzugeben, mit dem die in den Datenbanken sozialer Netzwerke abgelegten Daten unter Beachtung ihres vertraulichen Charakters zum Anbahnen einer Kommunikationsverbindung benutzt werden können.

Erfindungsgemäß wird diese Aufgabe durch ein Verfahren zum Anbahnen einer Kommunikationsverbindung gelöst, bei dem ansprechend auf eine entsprechende Suchanfrage einer Anfrageeinrichtung zu der Suchanfrage passende Datensätze in einer benutzeridentifizierende Identifikationsdaten sowie einen Kontakt zu dem entsprechenden Benutzer ermöglichende Kontaktdaten aufweisende Datensätze enthaltenden Speichereinrichtung gesucht und den zu der Suchanfrage passenden Datensätzen zur Identifikation der Suchanfrage dienende Anfragedaten zugeordnet werden, die Identifikationsdaten der passenden Datensätze zusammen mit den Anfragedaten an die Anfrageeinrichtung übertragen werden, die Anfragedaten ansprechend auf ein mit der Anfrageeinrichtung erzeugtes Bestätigungssignal an eine Vermittlungseinrichtung übertragen und von der Vermittlungseinrichtung an die Sucheinrichtung übertragen werden und von der Sucheinrichtung die zu den Anfragedaten gehörenden Kontaktdaten an die Vermittlungseinrichtung übertragen werden.

Dabei wird von der Erkenntnis Gebrauch gemacht, dass in den Datenbanken sozialer Netzwerke üblicherweise Datensätze abgelegt sind, die sowohl benutzeridentifizierende Identifikationsdaten, wie etwa den Namen der Person, dessen Wohnort, dessen berufliche Tätigkeit o. dgl., sowie einen Kontakt zu dem entsprechenden Benutzer ermöglichende Kontaktdaten, wie etwa die Telefonnummern der gesuchten Person abgelegt sind, wobei der vertrauliche Charakter dieser Datensätze bewahrt werden kann, wenn dafür Sorge getragen wird, dass die Identifikationsdaten außerhalb der sozialen Netzwerke niemals zusammen mit den Kontaktdaten übertragen werden. Das wird bei Einsatz erfindungsgemäßer Verfahren vermieden, wenn auf eine zum sozialen Netzwerk gehörende Sucheinrichtung zurückgegriffen wird, weil so auf die Übermittlung der vollständigen, die benutzeridentifizierenden Identifikationsdaten und die zu diesem Benutzer gehörenden Kontaktdaten enthaltenden Datensätze außerhalb der sozialen Netzwerke verzichtet werden kann, um so den vertraulichen Charakter dieser Datensätze zu erhalten. Auf diese Weise kann unter Beachtung des vertraulichen Charakters der in den Datenbanken sozialer Netzwerke abgelegten ein Kontakt angebahnt werden.

Zweckmäßigerweise wird dazu mit der Vermittlungseinrichtung ansprechend auf den Eingang der Kontaktdaten von der Sucheinrichtung eine Kontaktwunschnachricht an die durch die zu den Kontaktdaten gehörenden Identifikationsdaten identifizierte Person übermittelt und ggf. eine Kommunikationsverbindung mit dieser Person hergestellt.

Der Integrationsaufwand im Zusammenhang mit der Implementierung erfindungsgemäßer Verfahren kann reduziert werden, wenn die Anfragedaten das Format von Telefonnummern aufweisen, weil diese über ein Standardprotokoll, wie etwa E115 oder ITG/OTG, übertragen werden können. Die Übermittlung der Anfragedaten an die Vermittlungseinrichtung kann in Form eines Telefonanrufs erfolgen. Bei einer besonders bevorzugten Ausführungsform der Erfindung wird die Kontaktwunschnachricht über die der Übermittlung der Anfrage dienenden Telefonanrufe zum identifizierten Benutzer weiter vermittelten Anruf transportiert. Dabei kann die Herstellung des Kontaktes zwischen dem anfragenden und dem identifizierten Benutzer durch Herauslösen der Anfrageeinrichtung aus der Verbindung zwischen dem anfragenden und dem identifizierten Benutzer erfolgen. Bei einer alternativen Ausführungsform der Erfindung kann die Anfrageeinrichtung auch sofort aus der Kommunikationsverbindung herausgelöst werden und die Übermittlung der Kontaktwunschnachricht sowie die Zusammenschaltung von dem anfragenden und dem identifizierten Benutzer alleine über die Vermittlungseinrichtung erfolgen.

Falls mit der Sucheinrichtung festgestellt, dass der identifizierte Benutzer einen Kontakt zu dem Nachfrager ohnehin bereits erlaubt hat, was beispielsweise anhand von in der Datenbank des sozialen Netzwerks abgelegten Zulassungsdaten bestätigt werden kann, kann unmittelbar ein Kontakt zwischen Nachfrager und identifiziertem Benutzer hergestellt werden.

Sofern ein Kontaktwunsch von einem identifizierten Benutzer negativ beschieden wird, kann diese Information über die Sucheinrichtung unter Verwendung der Anfragedaten in die Datenbank des sozialen und mobilen Netzwerks zurück übermittelt werden. Dort kann diese Information dazu verwendet werden, die Zulassungsdaten des Benutzers zu verändern.

Bei den Kontaktdaten kann es sich um Telefonnummern, E-Mail-Adressen, Telefaxnummern o. dgl. handeln.

Die Suchanfrage kann beispielsweise über einen Verbindungsbutton auf Webseiten erfolgen.

Im Zusammenhang mit der Kontaktherstellung können zur Übermittlung der Kontaktwunschnachricht auch Aufsprechautomaten zum Einsatz kommen.

Wie der vorstehenden Erläuterung erfindungsgemäßer Verfahren zu entnehmen ist, ist eine erfindungsgemäße Vorrichtung zum Ausführen eines derartigen Verfahrens mit einer zum Erzeugen einer Suchanfrage betreibbaren Anfrageeinrichtung, einer die Suchanfrage empfangenden und zum Suchen zu der Suchanfrage passender Datensätze in einer benutzeridentifizierende Identifikationsdaten sowie einen Kontakt zu dem entsprechenden Benutzer ermöglichende Kontaktdaten aufweisende Datensätze enthaltenden Speichereinrichtung betreibbaren Sucheinrichtung im wesentlichen **dadurch gekennzeichnet, dass** die Sucheinrichtung dazu ausgelegt ist, den zu der Suchanfrage passenden Datensätzen Anfragedaten zuzuordnen und die Identifikationsdaten der passenden Datensätze zusammen mit den Anfragedaten an die Anfrageeinrichtung zu übertragen, die Anfragedateneinrichtung dazu ausgelegt ist, die Anfragedaten ansprechend auf ein Bestätigungssignal an eine Vermittlungseinrichtung zu übertragen, die Vermittlungseinrichtung dazu ausgelegt ist, die von der Anfrageeinrichtung empfangenen Anfragedaten an die Sucheinrichtung zu übertragen und die Sucheinrichtung dazu ausgelegt ist, ansprechend auf die von der Vermittlungseinrichtung empfangenen Anfragedaten die dazu gehörigen Kontaktdaten an die Vermittlungseinrichtung zu übertragen.

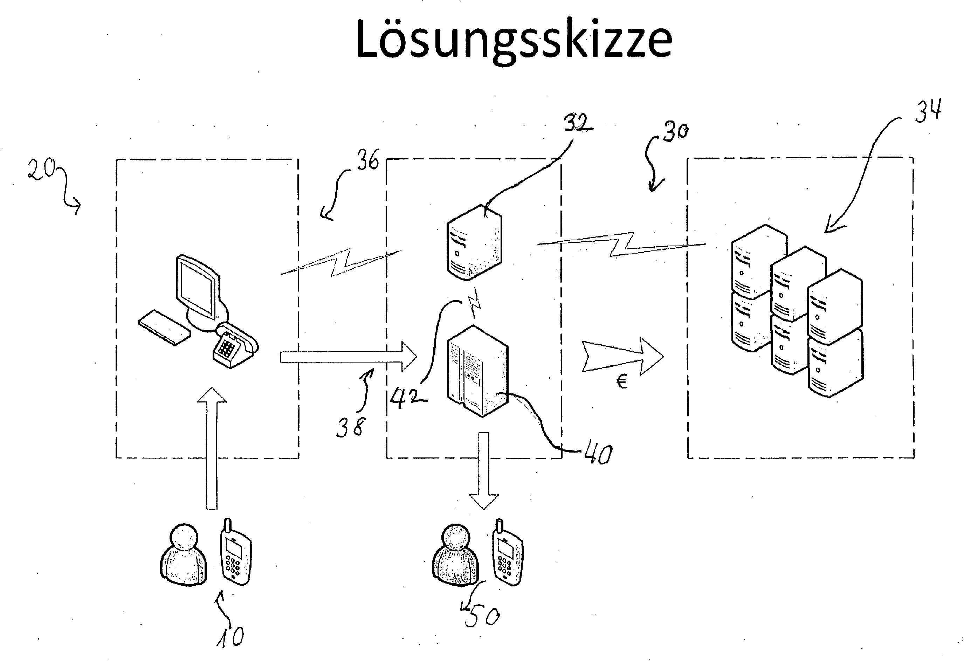

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. Die einzige Figur der Zeichnung zeigt eine schematische Darstellung einer zur Ausführung erfindungsgemäßer Verfahren einsetzbaren erfindungsgemäßen Vorrichtung.

Bei Einsatz der in der Zeichnung dargestellten Vorrichtung zur Ausführung erfindungsgemäßer Verfahren wird eine Anfrageeinrichtung 20 von einem anfragenden Benutzer 10 telefonisch beauftragt, einen Kontakt zu einer durch den Namen, die Anschrift, die berufliche Tätigkeit o. dgl. identifizierbare Person 50 anzubahnen. Ansprechend auf diese Anfrage sendet die Anfrageeinrichtung 20 entsprechende Suchdaten an eine Sucheinrichtung 32 eines sozialen Netzwerks 30. Mit Hilfe der Sucheinrichtung 32 werden in einer benutzeridentifizierenden Identifikationsdaten sowie einen Kontakt zu dem entsprechenden Benutzer ermöglichende Kontaktdaten aufweisende Datensätze enthaltenden Speichereinrichtung 34 zu der Suchanfrage passende Datensätze gesucht und an die Sucheinrichtung 32 übermittelt. Den einzelnen passenden Datensätzen werden in der Sucheinrichtung 32 Anfragedaten (ID) zugeordnet. Die Identifikationsdaten der passenden Datensätze werden zusammen mit den Anfragedaten an die Anfrageeinrichtung 20 übermittelt und der anfragenden Person 10 telefonisch, über das Internet oder über andere Kommunikationswege zur Kenntnis gebracht. Anhand der Identifikationsdaten kann die anfragende Person 10 entscheiden, ob die gefundene Person mit der gesuchten Person übereinstimmt. Ansprechend auf ein entsprechendes Bestätigungssignal werden die Identifikationsdaten (ID) an eine Vermittlungseinrichtung 40 übermittelt, wie bei 38 angedeutet. Von der Vermittlungseinrichtung 40 werden die Anfragedaten an die Sucheinrichtung 32 übermittelt, welche daraufhin die zu den Anfragedaten gehörenden Kontaktdaten an die Vermittlungseinrichtung 40 übermittelt, wie bei 42 angedeutet. Mit Hilfe der so erhaltenen Kontaktdaten 40 wird es der Vermittlungseinrichtung 40 ermöglicht, eine Kontaktwunschnachricht an die durch die Identifikationsdaten übermittelten Daten zu senden, wobei die Kontaktwunschnachricht auch die anfragende Person 10 identifizierende Daten erhalten kann. Sofern die angefragte Person 50 einer Kontaktvermittlung zustimmt kann ein Kontakt zwischen der anfragenden Person 10 und der angefragten Person 50 hergestellt werden.

Bei einer bevorzugten Ausführungsform der Erfindung wird unmittelbar ein Kontakt zwischen der anfragenden Person 10 und der gesuchten Person 50 hergestellt, wenn anhand der in der Speichereinrichtung 34 abgelegten Datensätze festgestellt wird, dass die angefragte Person 50 ohnehin die Herstellung eines Kontaktes mit der anfragenden Person 10 erlaubt hat.

Bei der anhand der Zeichnung dargestellten Ausführungsform der Erfindung bildet die Sucheinrichtung 32 einen Bestandteil eines sozialen Netzwerks wie etwa facebook, Linked-In, XING, etc., das durch geeignete Maßnahmen vor unerlaubtem Zugriff auf Daten geschützt ist. Es wird bei diesem Verfahren sichergestellt, dass die Übermittlung der vollständigen die Benutzer identifizierenden Identifikationsdaten und die zu diesem Benutzer gehörenden Kontaktdaten enthaltenden Datensätze außerhalb der sozialen Netzwerke vermieden wird, um so den vertraulichen Charakter dieser Datensätze zu erhalten.

## Patentansprüche

1. Verfahren zum Anbahnen einer Kommunikationsverbindung, bei dem ansprechend auf eine entsprechende Suchanfrage einer Anfrageeinrichtung zu der Suchanfrage passende Datensätze in einer benutzeridentifizierende Identifikationsdaten sowie einen Kontakt zu dem entsprechenden Benutzer ermöglichende Kontaktdaten aufweisende Datensätze enthaltenden Speichereinrichtung gesucht und den zu der Suchanfrage passenden Datensätzen zur Identifikation der Suchanfrage dienende Anfragedaten zugeordnet werden, die Identifikationsdaten der passenden Datensätze zusammen mit den Anfragedaten an die Anfrageeinrichtung übertragen werden, die Anfragedaten ansprechend auf ein mit der Anfrageeinrichtung erzeugtes Bestätigungssignal an eine Vermittlungseinrichtung übertragen und von der Vermittlungseinrichtung an die Sucheinrichtung übermittelt werden und von der Sucheinrichtung die zu den Anfragedaten gehörenden Kontaktdaten an die Vermittlungseinrichtung übertragen werden.

2. Verfahren nach Anspruch 1, **dadurch gekennzeichnet, dass** die Vermittlungseinrichtung ansprechend auf den Eingang der Kontaktdaten eine Kontaktwunschnachricht an die durch die zu den Kontaktdaten gehörenden Identifikationsdaten identifizierte Person übermittelt und ggf. eine Kommunikationsverbindung mit der Person herstellt.

3. Verfahren nach Anspruch 1 oder 2, **dadurch gekennzeichnet, dass** die Anfragedaten das Format von Telefonnummern aufweisen und über ein Standardprotokoll, wie etwa E115 oder ITG/OTG, übertragen werden.

4. Verfahren nach einem der vorhergehenden Ansprüche, **dadurch gekennzeichnet, dass** die Übermittlung der Anfragedaten an die Vermittlungseinrichtung in Form eines Telefonanrufs erfolgt.

5. Verfahren nach einem der vorhergehenden Ansprüche, **dadurch gekennzeichnet, dass** die Kontaktwunschnachricht in Form eines ggf. über einen von der Vermitttungseinrichtung vermittelten, insbesondere weiter vermittelten Anruf übermittelt wird.

6. Verfahren nach Anspruch 5, **dadurch gekennzeichnet, dass** die Kommunikationsverbindung durch Herauslösen der Anfrageeinrichtung erfolgt.

7. Verfahren nach einem der vorhergehenden Ansprüche, **dadurch gekennzeichnet, dass** die Suchanfrage über einen Verbindungsbutton auf ein Webseite erfolgt.

8. Vorrichtung zum Ausführen eines Verfahrens nach einem der vorhergehenden Ansprüche mit einer zum Erzeugen einer Suchanfrage betreibbaren Anfrageeinrichtung (20), einer die Suchanfrage empfangenden und zum Suchen zu der Suchanfrage passender Datensätze in einer benutzeridentifizierende Identifikationsdaten sowie einen Kontakt zu dem entsprechenden Benutzer ermöglichende Kontaktdaten aufweisende Datensätze enthaltenden Speichereinrichtung . (34) betreibbaren Sucheinrichtung (32), **dadurch gekennzeichnet, dass** die Sucheinrichtung (32) dazu ausgelegt ist, den zu der Suchanfrage passenden Datensätzen Anfragedaten (ID) zuzuordnen und die Identifikationsdaten der passenden Datensätze zusammen mit den Anfragedaten (ID) an die Anfrageeinrichtung (20) zu übertragen, die Anfrageeinrichtung (20) dazu ausgelegt ist, die Anfragedaten ansprechend auf ein Bestätigungssignal an eine Vermittlungseinrichtung (40) zu übertragen, die Vermittlungseinrichtung (40) dazu ausgelegt, die von der Anfrageeinrichtung (20) empfangenen Anfragedaten an die Sucheinrichtung (32) zu übertragen, und die Sucheinrichtung dazu ausgelegt ist, ansprechend auf die von der Vermittlungseinrichtung (40) empfangenen Anfragedaten (ID) die dazu gehörigen Kontaktdaten an die Vermittlungseinrichtung zu übertragen.
